# EUROPÄISCHE PATENTSCHRIFT

(11) **EP 4 174 120 B1**
(45) Veröffentlichungstag und Bekanntmachung des Hinweises auf die Patenterteilung: **13.12.2023**
(21) Anmeldenummer: 22201199.1
(22) Anmeldetag: 12.10.2022
(51) Int. Cl.: C08J 5/18, B32B 27/08, B32B 27/32, H01G 4/18

(54) **BIAXIAL-ORIENTIERTE FOLIE ENTHALTEND CYCLOOLEFINPOLYMERE UND ALPHA-OLEFINPOLYMERE, VERFAHREN ZU IHRER HERSTELLUNG, SOWIE IHRE VERWENDUNG IM KONDENSATOR**
BIAXIALLY ORIENTED FILM CONTAINING CYCLOOLEFIN POLYMERS AND ALPHA-OLEFIN POLYMERS, METHOD FOR PRODUCING THE SAME, AND USE THEREOF IN CONDENSER
FILM ORIENTÉ BIAXIALEMENT CONTENANT DES POLYMÈRES DE CYCLO-OLÉFINE ET DES POLYMÈRES D'ALPHA-OLÉFINE, PROCÉDÉ POUR SA PRÉPARATION ET SON UTILISATION DANS UN CONDENSATEUR

(30) Priorität: 29.10.2021 DE 102021128332
(43) Veröffentlichungstag der Anmeldung: 03.05.2023
(73) Patentinhaber: Brückner Maschinenbau GmbH, 83313 Siegsdorf (DE)
(72) Erfinder: WAGNER, Christina, 83435 Bad Reichenhall (DE); LUND, Roland, 83236 Übersee (DE)
(74) Vertreter: Flach Bauer & Partner Patentanwälte mbB

(56) Entgegenhaltungen:
- WO-A1-2012/022409
- WO-A1-2018/197034
- WO-A1-2021/014883
- DE-A1-102017 118 202
- DE-U1-202020 003 627
- TOPAS ADVANCED POLYMERS GMBH: "Cyclic Olefin Copolymer Blends - A New Approach for High Temperature Polypropylene Film Capacitors", RESEARCH DISCLOSURE, KENNETH MASON PUBLICATIONS, HAMPSHIRE, UK, GB, Bd. 655, Nr. 30, 5. Oktober 2018 (2018-10-05), Seite 1192, XP007146976, ISSN: 0374-4353 [gefunden am 2018-10-05]

## Beschreibung

### Einleitung

Biaxial orientierte Folie enthaltend a) 1 bis 25 Gewichtsprozente von wenigstens 2 Cycloolefinpolymeren mit einer Glasübergangstemperatur im Bereich von 120 bis 180°C und b) 75 bis 99 Gewichtsprozente wenigstens eines teilkristallinen alpha-Olefinpolymer mit einer Kristalitschmelztemperatur im Bereich von 150 bis 170°C, wobei die Folie wenigstens ein erstes Cycloolefinpolymer und ein zweites Cycloolefinpolymer enthält, wobei das zweite Cycloolefinpolymer eine höhere Glasübergangstemperatur aufweist, als das erste Cycloolefinpolymer und wobei das gewichtete arithmetische Mittel der Glasübergangstemperaturen aller in der Folie enthaltenen Cycloolefinpolymere kleiner oder gleich dem gewichteten arithmetischen Mittel der Kristallitschmelztemperatur aller in der Folie enthaltenen teilkristallinen alpha-Olefinpolymere ist.

### Stand der Technik

Thermoplastische Kunststoffe spielen in der Elektrotechnik eine bedeutende Rolle als Isolatoren und Dielektrika, insbesondere in Form von Folien. Am meisten verbreitet ist die Verwendung von alpha-Polyolefinen und insbesondere von Polypropylen (PP). Die Patentdokumente WO 2015/091829 A1, US 5,724,222 A und EP 2 481 767 A2 beschreiben biaxial orientierte Polypropylen-Folien zur Verwendung als Dielektrikum in Kondensatoren. Während Polyethylen-Folien für die Verwendung als Dielektrikum im Allgemeinen ausgezeichnet geeignet sind, zeigen Sie bei hohen Temperaturen einen hohen Schrumpf. Dies macht die Folien für den Gebrauch bei hohen Temperaturen ungeeignet. In Folienkondensatoren finden vorwiegend biaxial orientierte Polypropylenfolien Anwendung. Dies begründet sich insbesondere im geringen Verlustfaktor und der hohen Spannungsfestigkeit von Polypropylen. Einschränkungen ergeben sich jedoch hinsichtlich der Temperaturstabilität (Anwendungsbereich 85 bis 105°C). Bei Temperaturen über 105°C ist ein Spannungsderating erforderlich, die maximal zulässige Spannung muss also herabgesetzt werden. Der Einsatz bei Temperaturen über 115°C ist nur mit großen Einschränkungen bzw. nicht möglich.

Cycloolefinpolymere weisen eine deutlich bessere Wärmeformbeständigkeit auf als gewöhnliche Polyolefine. Die Verwendung von Cycloolefinpolymeren (COC) als Kondensatorfolien ist bekannt. Diese Polymere weisen bedingt durch ihre hohen Glasübergangstemperaturen eine hohe Sprödigkeit auf, sodass eine biaxiale Verstreckung nur schwer bzw. nicht möglich ist. Ihre Verwendung in Kondensatoren ist aus den Dokumenten EP 0 992 531 A1, WO 00/63013 A2 und CA 2 115 196 C bekannt. Folien aus Cycloolefinpolymeren lassen sich nur auf besonders dafür hergestellten Maschinen herstellen und erlauben keine hohen Verstreckungsverhältnisse, was zur Herstellung dünner Folien, wie sie in Kondensatoren bevorzugt zum Einsatz kommen, ungünstig ist.

Um die Temperaturbeständigkeit von Cycloolefinpolymeren für die Anwendung in Kondensatoren nutzen zu können, können Blends aus Polypropylen und Cycloolefinpolymer verwendet werden. Blends von Polypropylen und Cycloolefinpolymeren sind aus der JP H05-262989, der DE 10 2010 034 643 A1 und der DE 195 36 043 bekannt. In der WO 2018/197034 A1 und der DE 10 2017 118 202 A1 werden spezifisch Folien für den Einsatz in Folienkondensatoren beschrieben.

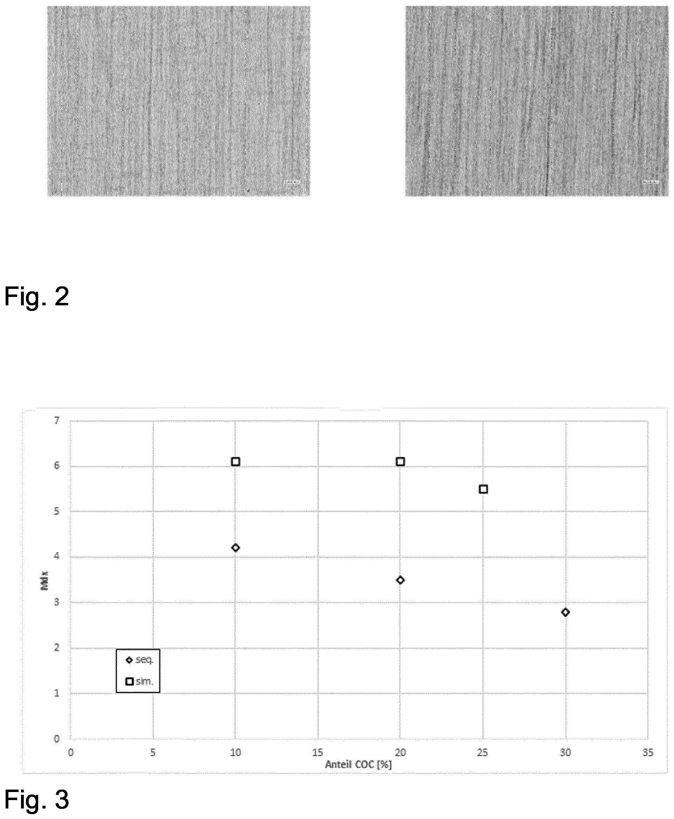

Die WO 2018/197034 A1 beschreibt Folien mit einem Gehalt von 10 bis 45 Gewichtsprozenten eines Cycloolefinpolymeren mit einer Glasübergangstemperatur von 120 bis 170°C und einem teilkristallinen alpha-Olefinpolymeren (in der Regel Polypropylen) mit einer Kristallitschmelztemperatur im Bereich von 150 bis 170°C, wobei die Glasübergangstemperatur des Cycloolefinpolymeren kleiner oder gleich der Kristallitschmelztemperatur des alpha-Olefinpolymeren ist. Die hergestellten Folien weisen eine günstige Oberflächenrauheit und einen geringen Thermoschrumpf auf. Hierbei treten in den angegebenen Mengenbereichen bei hohen Anteilen des Cycloolefinpolymeren die Eigenschaften der Cycloolefinpolymeren stärker hervor, das heißt bei hohen Anteilen des Cycloolefinpolymeren weisen die Folien gute thermische Eigenschaften auf, einschließlich eines geringen Schrumpfs, sind jedoch spröder und daher schlechter verarbeitbar, insbesondere sinkt das maximal möglich Reckrate bei der Herstellung dünner Folien, was die Herstellung dünner Folien bei hohen Reckraten unmöglich macht. Wendet man bei hohen Anteilen des Cycloolefinpolymeren hohe Reckraten an, so reißt die Folie leicht und die erforderlichen Bahnlängen können nicht mehr hergestellt werden. Figur 3 illustriert dieses Problem. Unter sonst gleichen Bedingungen muss die Reckrate insbesondere in Längsrichtung verringert werden, um bei hohen Anteilen von Cycloolefinpolymeren noch eine auf einer herkömmlichen Bandstraße verarbeitbare Folie zu erhalten. Die Punkte in der Figur 3 geben die höchstmögliche Reckrate in Längsrichtung an, bei der bei dem angegebenen Gehalt an Cycloolefinpolymeren noch eine kontinuierliche Produktion einer Folie möglich ist. Auf modernen Bandstraßen werden üblicherweise etwa Folien mit einer Länge von bis zu 30.000 m erzeugt. Reißen die Folien leicht, so ist es nicht mehr möglich, Folienbahnen von definierter Länge herzustellen. Dies behindert eine wirtschaftliche Herstellung der Folien und deren wirtschaftliche Verwendung.

Die gleichen Probleme treten beim Einsatz von Cycloolefinpolymeren mit hoher Glasübergangstemperatur auf. Bei Verwendung eines Cycloolefinpolymeren mit höherer Glasübergangstemperatur nimmt die Sprödigkeit des COC/PP Gemischs wesentlich zu, sodass eine stabile Folienproduktion auch durch Anpassung der Prozessparameter nur bedingt bzw. nicht möglich ist. Insgesamt ergibt sich ein Verlust der Laufstabilität, d.h. bei Folienherstellung kommt es bei der Verstreckung zu vermehrten Abrissen, sodass eine stabile Produktion nicht gegeben ist. Erforderliche Lauflängen von bis zu 30.000 m sind nicht produzierbar.

Gemäß der WO 2018/197034 A1 sind Folien, die bis zu Temperaturen von 120 bis 125°C in Kondensatoren einsetzbar sind, mit genügender Reckrate herstellbar. Für verschiedene Anwendungen sind jedoch höhere Temperaturfestigkeiten und geringere Foliendicken erforderlich, insbesondere für Anwendungen in Kondensatoren für den Automobilbau. Im Automobilbau werden elektronische Schaltungen häufig in Hochtemperaturumgebungen, wie dem Motorraum oder in der Nähe zu Batterien eingesetzt.

### Aufgabe der Erfindung

Es war die Aufgabe der vorliegenden Erfindung, Folien herzustellen, die gute elektrische Eigenschaften und bei hohen Temperaturen einen geringen Schrumpf aufweisen. Eine hohe Hitzestabilität ist wünschenswert. Die Folien sollen bevorzugt in herkömmlichen Anlagen zur Herstellung von biaxial orientierten Folien herstellbar sein. Insbesondere ist es wichtig, dass sie bei hohen Foliengeschwindigkeit zu langen Bahnen verarbeitet werden können. Es ist ferner von Vorteil, wenn die Folien mit hohen Reckraten herstellbar sind. Die Herstellung von Folien mit geringer Dicke wird ebenfalls angestrebt. Schließlich ist es ein Anliegen dieser Erfindung die Herstellung von Folien für zum Beispiel Kondensatoren wirtschaftlich günstiger zu machen.

### Beschreibung der Erfindung

Gegenstand der vorliegenden Erfindung ist eine biaxial orientierte Folie enthaltend
a) wenigstens 2 Cycloolefinpolymere und
b) wenigstens ein teilkristallines alpha-Olefinpolymer,
wobei die Summe der Anteile aller Cycloolefinpolymere in der Folie im Bereich von 1 bis 25 Gewichtsprozenten liegt und alle in der Folie enthaltenen Cycloolefinpolymeren eine Glasübergangstemperatur im Bereich von 120 bis 180°C aufweisen und die Folie wenigstens ein erstes Cycloolefinpolymer und ein zweites Cycloolefinpolymer enthält, wobei das zweite Cycloolefinpolymer eine höhere Glasübergangstemperatur aufweist, als das erste Cycloolefinpolymer und wobei die Summe der Anteile aller teilkristallinen alpha-Olefinpolymere in der Folie im Bereich von 75 bis 99 Gewichtsprozenten liegt und alle in der Folie enthaltenen teilkristallinen alpha-Olefinpolymere eine Kristallitschmelztemperatur im Bereich von 150 bis 170°C aufweisen und wobei das gewichtete arithmetische Mittel der Glasübergangstemperaturen aller in der Folie enthaltenen Cycloolefinpolymere kleiner oder gleich dem gewichteten arithmetischen Mittel der Kristallitschmelztemperatur aller in der Folie enthaltenen teilkristallinen alpha-Olefinpolymere ist und wobei alle Mengenangaben auf die gesamte Masse der Folie bezogen sind. Alle in Bezug auf diese Erfindung angegebenen Anteile in Gewichtsprozent sind jeweils auf die gesamte Masse der Folie bezogen, soweit nichts anderes angegeben ist.

Die Begriffe "orientieren", "recken", "verrecken", "strecken", und "verstrecken" haben im Sinne der vorliegenden Beschreibung die gleiche Bedeutung. Dies gilt auch für entsprechende Begriffe wie "Recken", "Verstrecken", "Verstreckung" usw.

Die erfindungsgemäßen Folien bieten überraschender Weise eine Kombination aus guter Verarbeitbarkeit bei der Herstellung, hoher Temperaturbeständigkeit und guten elektrischen Eigenschaften, welche die Folien aus dem Stand der Technik nicht in diesem Ausmaß bieten. Gemäß dem Stand der Technik verringert der Zusatz eines Cycloolefinpolymers mit höherer Glasübergangstemperatur die Verarbeitbarkeit. Wie die vorliegende Erfindung zeigt, ist dies überraschender Weise jedoch nicht oder nicht in dem gleichen Ausmaß der Fall, wenn Mischungen von Cycloolefinpolymeren eingesetzt werden, in denen die Cycloolefinpolymere verschiedene Glasübergangstemperaturen aufweisen.

Die gute Verarbeitbarkeit zeigt sich darin, dass die erfindungsgemäßen Folien die Herstellung mit einem Flächenreckverhältnis von etwa 50 erlauben. Das Flächenreckverhältnis ist das Produkt aus der Reckrate in Längsrichtung und der Reckrate in Querrichtung. Diese hohen Flächenreckverhältnisse erlauben das Herstellen von dünnen Folien mit, zum Beispiel einer Dicke von weniger als 5 µm. Geringe Foliendicken sind erforderlich, um in Kondensatoren eine hohe Kapazität bei geringer Volumenbeanspruchung (Bauraum) zu erlauben. Gleichzeitig erlauben die Folien die Herstellung mit einer Foliengeschwindigkeit von 280 m/min bei nach dem Verstrecken bzw. beim Aufwickeln (eine typische Foliengeschwindigkeit bei der Herstellung von Folien ist 250 m/min). Die erfindungsgemäßen Folien sind daher in wirtschaftlicher Weise herstellbar.

Gleichzeitig sind die erfindungsgemäßen Folien als Dielektrikum in Kondensatoren bis zu Temperaturen von 135°C einsetzbar und sind damit auch in dieser Eigenschaft den Folien aus dem Stand der Technik überlegen. Sie zeigen bei dieser Temperatur deutlich überlegene elektrische Eigenschaften gegenüber Folien aus dem Stand der Technik. Folienkondensatoren müssen insbesondere im Bereich Automotive gesteigerten Anforderungen hinsichtlich Temperatur und Spannung gerecht werden. Geforderte Einsatztemperaturen liegen bei 125°C und mehr insbesondere bei 135°C und mehr. Durch die Erfindung wird eine biaxial verstreckte Folie bereitgestellt, die den gesteigerten Anforderungen gerecht wird. Die vorliegende Erfindung erschließt Folien, die alpha-Polyolefine und Cycloolefinpolymere enthalten, daher einen neuen weiten Anwendungsbereich. Die Folien weisen ferner geringe Schrumpfwerte bei hohen Temperaturen auf, insbesondere in der Querrichtung (TD). Gegenüber den aus der WO 2018/197034 A1 bekannten Folien ergeben sich somit dünnere Folien bei preisgünstiger Herstellung und ein möglicher Einsatz bei höheren Temperaturen. Ferner besitzen die erfindungsgemäßen Folien gute elektrische Eigenschaften und günstige Oberflächenrauheiten.

Ein weiterer Effekt der vorliegenden Erfindung ist es, dass durch die Kombination zweier Cycloolefinpolymeren eine geringere Gesamtmenge von Cycloolefinpolymeren eingesetzt werden kann und so kann bei gleichbleibend guter Temperaturfestigkeit eine verbesserte Verarbeitbarkeit auf der Bandstraße erreicht werden kann. Dies wirkt sich positiv auf die erreichbare Reckrate aus, insbesondere bei der sequentiellen Verstreckung. Ferner werden bei Einsatz geringerer Mengen von Cycloolefinpolymeren Kosten eingespart. Eine negative Beeinflussung der elektrischen Eigenschaften ergibt sich nicht.

Der hohe Anteil von Polypropylen in den vorliegenden Folien sorgt dafür, dass die Folien während des Herstellens gut verarbeitbar und insbesondere gut verstreckbar sind. Überraschender Weise sorgt die Verwendung von zwei Cycloolefinpolymeren mit verschiedenen Glasübergangstemperaturen für günstige Hochtemperatureigenschaften ohne die Verarbeitbarkeit herabzusetzen.

Die in der vorliegenden Erfindung eingesetzten teilkristallinen alpha-Olefinpolymere sind bevorzugt Polymere von C3 bis C8 Polyolefinen. Die Seitenketten können linear oder verzweigt sein. In der Regel handelt es sich um Polypropylen. Polypropylen verleiht den erfindungsgemäßen Folien gute Verarbeitbarkeit und gute elektrische Eigenschaften. Insbesondere handelt es sich für gewöhnlich um Propylen-Homopolymere. Das Polypropylen kann jedoch bis zu 10 Gewichtsprozent, und bevorzugt bis zu 5 Gewichtsprozente eines oder mehrerer C4 bis C8 Polyolefinen als Comonomere enthalten. Bevorzugt sind die C4 bis C8 Polyolefinen ausgesucht aus der Gruppe bestehend aus 1-Buten, 1-Hexen und 1-Okten.

Die teilkristallinen Polyolefine können linear oder verzweigt sein. Ferner kann es sich um statistische oder Blockcopolymere handeln. Es kann sich ferner um isotaktische, syndiotaktische oder um ataktische Polymere handeln. Isotaktische Polypropylene sind bevorzugt. Der Kristallisationsgrad bewegt sich bei Polypropylenen typischerweise im Bereich von 35% bis 80 %, vorzugsweise im Bereich von 60 bis 80 %. Der Kristallisationsgrad wird gemäß ISO 11357 per Differential-Scanning-Kalorimetrie (DSC) mit einer Aufheizgeschwindigkeit von 10K/min gemessen. Besonders bevorzugt sind isotaktische Propylene mit einem Kristallisationsgrad im Bereich von 60 bis 80 %. Gewöhnlich werden Polypropylene mit Dichten im Bereich von 0,895 g/cm³ bis 0,920 g/cm³ eingesetzt. Die Dichte wird gemäß ISO 1183 gemessen.

Die Kristallitschmelztemperatur liegt bevorzugt im Bereich von 160 bis 165°C. Die Modifikation der Kristallitschmelztemperatur durch Verwendung von Copolymerisaten ist dem Fachmann bekannt. Die Kristallitschmelztemperatur wird gemäß ISO 11357 per Differential-Scanning-Kalorimetrie (DSC) mit einer Aufheizgeschwindigkeit von 10K/min gemessen. Die eingesetzten teilkristallinen alpha-Olefinpolymeren weisen bevorzugt einen Schmelzflussindex (Melt-Flow-Rate, Tg) im Bereich von 1 bis 4 g/10 Minuten auf, gemessen bei einer Temperatur von 230°C unter einer Belastung von 2,16 kg. So weit nicht anders angegeben, werden alle Schmelzflussindeces dieser Beschreibung gemäß ISO 1133 gemessen.

Um vorteilhafte elektrische Eigenschaften der Folien zu erreichen sind die Folien bevorzugt besonders rein. Hierfür wird als alpha-Polyolefinpolymer bevorzugt eine hochreine Qualität gewählt. Es ist besonders bevorzugt, dass die erfindungsgemäße Folie einen niedrigen Metallgehalt aufweist, da bereits Spuren von Metallen im Dielektrikum eines Kondensators die elektrischen Eigenschaften des Kondensators nachteilig beeinflussen können. Vorzugsweise beträgt der Gesamtgehalt an Eisen, Kobalt, Nickel, Titan, Molybdän, Vanadium, Chrom, Kupfer und Aluminium in der erfindungsgemäßen Folie weniger als 0,25 ppm.

Besonders geeignete Typen sind die kommerziell erhältlichen Polymere "Borclean^{®} HC300BF", "Borclean^{®} HC312BF", beide von der Firma Borealis, Polyolefine der Firma "The Polyolefin Company" (TPC), Singapur und "Prime Polymer".

Die in der vorliegenden Erfindung eingesetzten Cycloolefinpolymere können sowohl Homopolymere als auch Copolymere sein. Sie können durch ringöffnende oder insbesondere durch ringerhaltende Polymerisation hergestellt werden. Vorzugsweise werden sie durch ringerhaltende Copolymerisation von cyclischen Olefinen, wie Norbornen, mit nicht-cyclischen Olefinen, wie alpha-Olefinen oder Ethylen hergestellt, wobei Ethylen bevorzugt ist. Informationen über in der vorliegenden Erfindung verwendbaren Cycloolefinpolymere finden sich zum Beispiel in der WO 2018/197034 A1 und den dort zitierten Dokumenten. Es können auch Cycloolefinpolymere eingesetzt werden, deren verbliebene Doppelbindungen nach der Polymerisation hydriert wurden.

Bevorzugt sind Cycloolefinpolymere die durch ringerhaltende Copolymerisation von mindestens einem Olefin der Formel (I) mit mindestens einem alpha-Olefin der Formel (II) hergestellt werden können. 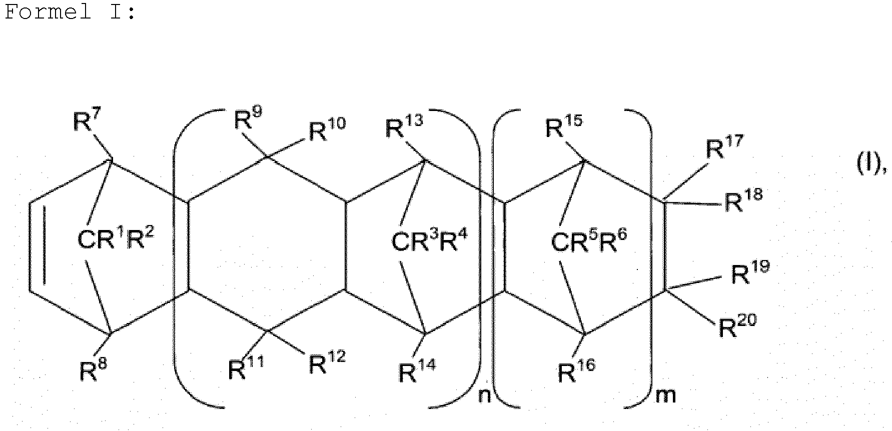 worin
n 0 oder 1 ist,
m o oder eine positive ganze Zahl ist, bevorzugt 0 oder 1,
R¹, R², R³, R⁴, R⁵ und R⁶ unabhängig voneinander ausgesucht sind aus der Gruppe bestehend aus Wasserstoff, Halogen, Alkylgruppen, Cycloalkylgruppen, Arylgruppen und Alkoxygruppen,
R¹⁷, R¹⁸, R¹⁹ und R²⁰ unabhängig voneinander ausgewählt sind aus der Gruppe bestehend aus Wasserstoff und Alkylgruppen,
wobei R17 und R19 gemeinsam einen Ring oder ein Ringsystem bilden können, wobei die Ringe gesättigt oder ungesättigt sein können. 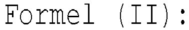 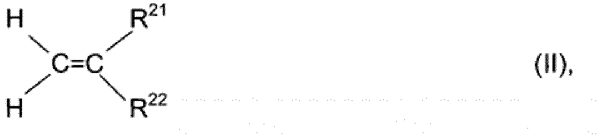 wobei R²¹ und R²² unabhängig voneinander ausgewählt sind aus der Gruppe bestehend aus Wasserstoff und Alkylgruppen.

Bevorzugt sind Cycloolefinpolymere in denen n 0 ist, m 0 oder 1 ist, R²¹ Wasserstoff ist und R²² ausgesucht ist aus der Gruppe bestehend aus Wasserstoff und einer C1 bis C8 Alkylgruppe. Darunter wiederum sind solche Polymere bevorzugt, in denen auch R¹, R², R⁵ bis R⁸ und R¹⁵ bis R²⁰ Wasserstoff sind. Ganz besonders bevorzugt sind Copolymere aus Norbornen und Ethylen und aus Tetracyclododecen und Ethylen.

Am meisten bevorzugt ist eine erfindungsgemäße Folie, wobei alle darin enthaltenen Cycloolefinpolymere Copolymere sind, die Norbornen und Ethylen als Monomere enthalten. Die Polymerisation wird bevorzugt in Gegenwart eines Metallocen-Katalysators durchgeführt.

Den Cycloolefinpolymeren der Folie der vorliegenden Erfindung werden die Monomeren der Formel (I) und (II) bevorzugt in einem Molverhältnis von 95:5 bis 5:95 eingesetzt. Sie können bis zu 10 Molprozente bezogen auf die gesamte Monomermenge von einem oder mehreren Comonomeren ausgesucht aus der Gruppe bestehend aus Propylen, Penten, Hexen, Cyclohexen und Styrol enthalten.

Bevorzugte Cycloolefinpolymere können der DE 102 42 730 A1 entnommen werden. Besonders bevorzugt sind die Typen Topas@ 6013, Topas@ 6015, Topas@ 6017 und Topas@ 5013 der Firma Topas Advanced Polymers GmbH, Frankfurt am Main, Deutschland, Polymere der Mitsui Chemicals mit der Bezeichnung "APEL COC" und Polymere der Firma JSR Corporation mit der Bezeichnung "ARTON COC". Am meisten bevorzugt sind Topas@ 6013 M07/S04, TOPAS^{®} 6015 S04 und TOPAS^{®} 6017 S04. Ebenfalls geeignet sind Polymere die durch ringöffnende Polymerisation von Cyclopentadien oder Norbornen herstellbar sind.

Die Glasübergangstemperatur der Cycloolefinpolymere liegt bevorzugt im Bereich von 120°C bis 170°C, besonders bevorzugt im Bereich von 130 bis 170°C und am meisten bevorzugt im Bereich von 140 bis 160°C. Die Glasübergangstemperatur wird gemäß ISO 11357 per DSC mit einer Aufheizgeschwindigkeit von 10K/min gemessen.

Bevorzugt weisen die Cycloolefinpolymere einen Schmelzflussindex im Bereich von 0,3 und 4 g/10 Minuten, gemessen bei einer Temperatur von 230°C unter einer Belastung von 2,16 kg auf.

Für den Einsatz der erfindungsgemäßen Folien in Kondensatoren ist eine geringe Oberflächenrauheit notwendig. Eine zu geringe Oberflächenrauheit führt aber zu einer schlechten Verarbeitbarkeit der Folie auf Bandstraßen. Für die Ausbildung einer ausreichenden aber auch nicht zu großen Oberflächenrauheit ist es vorteilhaft, wenn die Schmelzflussindeces der eingesetzten Polymeren aufeinander abgestimmt werden. Bevorzugt liegt das Verhältnis der Schmelzflussindeces von Cycloolefinpolymeren zu den teilkristallinen alpha-Olefinpolymeren im Bereich von 1:2 bis 2:1.

Das zweite Cycloolefinpolymer unterscheidet sich von dem ersten Cycloolefinpolymer zumindest darin, dass es eine höhere Glasübergangstemperatur aufweist. Bevorzugt ist die Glasübergangstemperatur wenigstens um 3°C höher, besonders bevorzugt wenigstens um 5 °C. Besonders bevorzugt ist die Glasübergangstemperatur wenigstens um 10°C höher.

Die Verwendung von mehreren teilkristallinen alpha-Olefinpolymeren ist möglich. Dies kann dazu dienen, die Eigenschaften der Folien zu optimieren. Zur Erzielung der Effekte der vorliegenden Erfindung ist dies jedoch nicht unbedingt notwendig. Durch die Verwendung von mehreren teilkristallinen alpha-Olefinpolymeren wird jedoch der Herstellungsprozess der Folien etwas komplizierter. Bevorzugt sind daher erfindungsgemäße Folien, wobei die Folie nur ein teilkristallines alpha-Olefinpolymer enthält und das gewichtete arithmetisches Mittel der Glasübergangstemperaturen aller in der Folie enthaltenen Cycloolefinpolymere kleiner oder gleich der Kristallitschmelztemperatur des teilkristallinen alpha-Olefinpolymer ist. Besonders bevorzugt ist eine erfindungsgemäße Folie, die nur ein teilkristallines alpha-Olefinpolymer enthält, bei dem es sich um Polypropylen handelt.

Die erfindungsgemäße Folie muss mindestens zwei Cycloolefinpolymere enthalten. Sie kann aber auch mehr als zwei Cycloolefinpolymere enthalten, also zum Beispiel 3 oder 4. Von den Cycloolefinpolymeren müssen wenigstens zwei eine voneinander verschiedene Glasübergangstemperatur aufweisen. Es können auch mehr als zwei, also zum Beispiel 3 oder 4 Cycloolefinpolymere enthalten sein, die voneinander abweichende Glasübergangstemperaturen aufweisen. Üblicherweise enthält die erfindungsgemä-ße Folie jedoch nur ein teilkristallines alpha-Olefinpolymer und neben dem ersten und dem zweiten Cycloolefinpolymer keine weiteren Cycloolefinpolymere.

Bevorzugt ist eine erfindungsgemäße Folie, wobei die Folie nur ein teilkristallines alpha-Olefinpolymer enthält, bei dem es sich um Polypropylen handelt und die Folie neben dem ersten und dem zweiten Cycloolefinpolymer keine weiteren Cycloolefinpolymere enthält und sowohl das erste als auch das zweite Cycloolefinpolymer Norbornen und Ethylen als Monomere enthalten. Solche Folien sind für den Einsatz in Kondensatoren besonders geeignet.

Die biaxiale Orientierung der erfindungsgemäßen Folien wird wesentlich sowohl vom Cycloolefinpolymer-Anteil als auch von der Glasübergangstemperatur der Cycloolefinpolymere beeinflusst. Die erfindungsgemäße Folie ist besonders für Kondensatoren geeignet, wenn die Summe der Anteile aller Cycloolefinpolymere in der Folie im Bereich von 10 bis 25 Gewichtsprozenten liegt und die Summe der Anteile aller teilkristallinen alpha-Olefinpolymere in der Folie im Bereich von 75 bis 90 Gewichtsprozenten liegt. Ganz besonders bevorzugt sind Folien, wobei die Summe der Anteile aller Cycloolefinpolymere in der Folie im Bereich von 10 bis 20 Gewichtsprozenten liegt und die Summe der Anteile aller teilkristallinen alpha-Olefinpolymere in der Folie im Bereich von 80 bis 90 Gewichtsprozenten liegt. Am meisten bevorzugt sind Folien bei welchen die Summe der Anteile aller Cycloolefinpolymere in der Folie im Bereich von 15 bis 20 Gewichtsprozenten liegt und die Summe der Anteile aller teilkristallinen alpha-Olefinpolymere in der Folie im Bereich von 80 bis 85 Gewichtsprozenten liegt.

Es ist ferner bevorzugt, wenn das erste und das zweite Cycloolefinpolymer jeweils zumindest in einer Menge von 3 Gewichtsprozenten und besonders bevorzugt zumindest in einer Menge von 5 Gewichtsprozenten enthalten sind.

In der Regel enthält die erfindungsgemäße Folie das erste Cycloolefinpolymer und das zweite Cycloolefinpolymer jeweils in einem Anteil im Bereich von 3 bis 22 Gewichtsprozenten, bevorzugt im Bereich von 3 bis 17 Gewichtsprozenten, besonders bevorzugt im Bereich von 5 bis 15 Gewichtsprozenten. Werden die Cycloolefinpolymer in diesen Mengen eingesetzt, so sind die Effekte, die durch Verwendung von mehr als einem Cycloolefinpolymer entstehen, besonders ausgeprägt.

Folien können neben den vorbeschriebenen Polymeren auch übliche Hilfs- und Zusatzstoffe enthalten. Gewöhnlich werden solche in Mengen von nicht mehr als 5 Gewichtsprozenten, bevorzugt nicht mehr als 2 Gewichtsprozenten zugesetzt. Die Hilfs- und Zusatzstoffe können ausgesucht sein aus der Gruppe bestehend aus Füllstoffen, Pigmenten, Farbstoffen, Ölen, Wachsen, Weichmacher, UV-Stabilisatoren, Mattierungsmittel, Konservierungsmittel, Biozide, Antioxidationsmittel, Antistatika, Flammschutzmittel, und Verstärkungsmittel. Bevorzug enthalten die Folien jedoch neben den vorbeschriebenen Polymeren keine weiteren Inhaltsstoffe. Insbesondere ist es bevorzugt, dass die Folien keine Festkörper (neben den vorbeschriebenen Polymeren) und insbesondere keine Antiblockmittel und keine Füllstoffe enthalten. Solche Feststoffe können elektrischen Eigenschaften negativ beeinflussen.

Bevorzugt weisen die erfindungsgemäßen Folien einen Wärmeschrumpf in Längsrichtung von höchstens 5 %, besonders bevorzugt von höchstens 3 % und ganz besonders bevorzugt von höchstens 2 % auf. Ferner weisen die erfindungsgemäßen Folien bevorzugt einen Wärmeschrumpf in Querrichtung (TD) von höchstens 0,5 %, besonders bevorzugt von höchstens 0.1 % und ganz besonders bevorzugt von höchstens 0.05 % auf. Der Wärmeschrumpf in Querrichtung ist entscheidend für die Anwendung in Kondensatoren, da ein solcher Wärmeschrumpf zur Beschädigung der Kondensatoren führt. Insbesondere sollten die Folien diese Werte des Wärmeschrumpf in beide Richtungen gleichzeitig aufweisen. Bevorzugt ist daher insbesondere eine erfindungsgemäße Folie, wobei die Folie einen Wärmeschrumpf in Längsrichtung von höchstens 5 % und in Querrichtung von höchstens 0,5% aufweist. Am meisten bevorzugt ist eine erfindungsgemäße Folie, wobei die Folie einen Wärmeschrumpf in Längsrichtung von höchstens 2% und in Querrichtung von höchstens 0.05 % aufweist. Der Wärmeschrumpf wird jeweils gemäß DIN ISO 11501 bei 130 °C und einer Dauer von 5 min gemessen. Am meisten bevorzugt sind jedoch erfindungsgemäße Folien, die solche Wärmeschrumpfwerte in Querrichtung bei einer Temperatur von 140°C aufweisen.

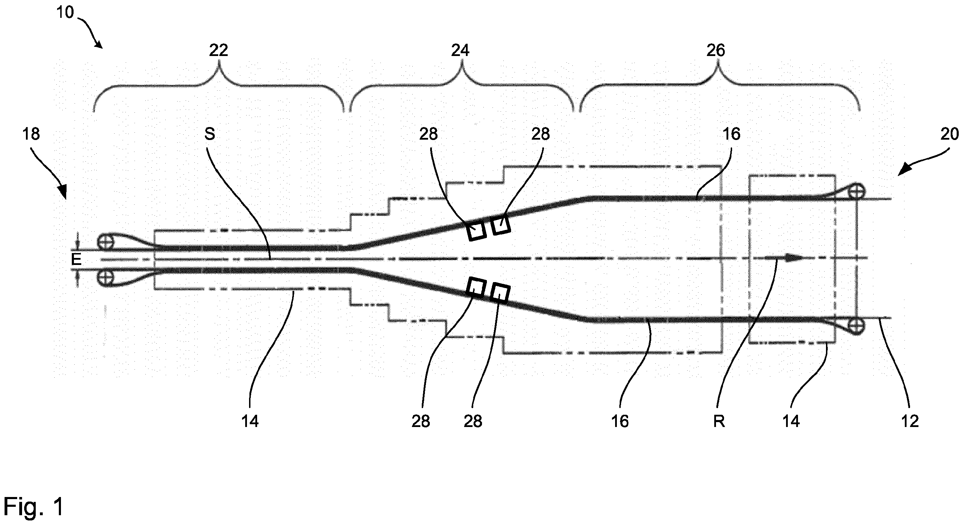

Die Rauheit der Folie spielt für die elektrischen Eigenschaften eine Rolle und aus diesem Grund ist eine geringe Rauheit bevorzugt. Da die erfindungsgemäßen Folien jedoch in der Regel keine Antiblockmittel enthalten, muss zumindest eine gewisse Oberflächenrauheit vorhanden sein, um die Verarbeitbarkeit der Folie zu gewährleisten. Allzu glatte Folien rutschen auf Transportrollen und können daher in industriellen Anlagen praktisch nicht verarbeitet werden. Bevorzugt ist eine Folie, die eine Oberflächenrauheit Ra im Bereich von 0,02 bis 0,2 pm, vorzugsweise von 0,04 bis 0,12 µm aufweist. Idealerweise weisen die erfindungsgemäßen Folien eine Oberflächenrauheit Ra im Bereich von 0,06 bis 0,09 auf. Die Oberflächenrauheit Ra wird bestimmt gemäß DIN EN ISO 4287. Wie Figur 1 zeigt, weisen die erfindungsgemäßen Folien auf beiden Seiten eine homogene fibrillare Oberflächenstruktur auf. Bei der Messung der Oberflächenrauheit Ra wird ein Messkopf über eine bestimmte Länge der Oberfläche geführt um die Unebenheiten zu vermessen. Da die Erhebungen der Oberflächen der erfindungsgemäßen Folien anisotrop sind, kann die Messung in Längsrichtung der Folie (Transportrichtung) und in der Richtung quer dazu eine andere Oberflächenrauheit ergeben. Es ist bevorzugt, wenn jeweils beide Messwerte in den angegebenen Bereichen liegen.

Wie dem Fachmann bekannt ist, kann die Oberflächenrauheit der Folie durch geeignete Wahl der Temperaturen der Kühlwalze und der Vorheiztemperatur zum Recken eingestellt werden. Im Fall des simultanen Verstreckens werden dabei die Temperaturen der Kühlwalze und die Vorheiztemperatur des Ofens zum simultanen Verstrecken (zum Beispiel einer LISIM-Anlage) aufeinander abgestimmt. Beim sequenziellen Verstrecken werden dabei die Temperaturen der Kühlwalze und die Vorheiztemperatur und die Streckwalzentemperatur der Längsreckeinrichtung (MDO) aufeinander abgestimmt.

Die erfindungsgemäße Folie weist bevorzugt eine Dicke im Bereich von 2 µm bis 10 µm auf. Besonders bevorzugt sind erfindungsgemäße Folien mit einer Dicke im Bereich von 2 bis 5 µm. Hierbei handelt es sich um die Foliendicken, wie sie nach DIN 53370 bestimmt werden. Folien mit solchen Dicken sind für die Anwendungen als Dielektrikum am besten geeignet.

Die Breite der erfindungsgemäßen Folien liegt typischerweise im Bereich von 0,1 bis 10m und meist im Bereich von 5 bis 7m.

Bevorzugt ist eine biaxial orientierte Folie enthaltend
a) wenigstens ein erstes Cycloolefinpolymer und ein zweites Cycloolefinpolymer, wobei beide jeweils 5 bis 95 Gewichtsprozente Norbornen und 5 bis 95 Gewichtsprozente Ethylen als Monomere enthalten, jeweils bezogen auf das gesamte Cycloolefinpolymer
und b) wenigstens ein teilkristallines Polypropylen,
wobei die Summe der Anteile aller Cycloolefinpolymere in der Folie im Bereich von 10 bis 25 Gewichtsprozenten liegt und alle in der Folie enthaltenen Cycloolefinpolymeren eine Glasübergangstemperatur im Bereich von 120 bis 180°C aufweisen, wobei das zweite Cycloolefinpolymer eine um wenigstens 3°C höhere Glasübergangstemperatur aufweist, als das erste Cycloolefinpolymer, wobei das erste Cycloolefinpolymer und das zweite Cycloolefinpolymer jeweils in einem Anteil im Bereich von 5 bis 15 Gewichtsprozenten in der Folie enthalten sind und wobei die Summe der Anteile aller teilkristallinen Polypropylene in der Folie im Bereich von 75 bis 90 Gewichtsprozenten liegt und alle in der Folie enthaltenen teilkristallinen alpha-Olefinpolymere in der Folie eine Kristalitschmelztemperatur im Bereich von 150 bis 170°C aufweisen und wobei das gewichtete arithmetisches Mittel der Glasübergangstemperaturen aller in der Folie enthaltenen teilkristallinen Polypropylene kleiner oder gleich dem gewichteten arithmetischen Mittel der Kristallitschmelztemperatur aller in der Folie enthaltenen teilkristallinen Polypropylene ist und wobei die Folie eine Dicke im Bereich von 2 µm bis 10 µm aufweist und soweit nicht anders vermerkt, alle Mengenangaben auf die gesamte Masse der Folie bezogen sind.

Die erfindungsgemäßen Folien können eine oder mehrere Schichten aufweisen und sind daher Einlagenfolien oder Mehrlagenfolien. In Mehrlagenfolien weist zumindest eine Schicht die Zusammensetzung der vorbeschriebenen erfindungsgemäßen Folie auf. Es können auch mehrere Schichten einer solchen Mehrlagenfolie aus einer erfindungsgemäßen Folie bestehen.

Eine weitere Ausführungsform der vorliegenden Erfindung ist daher eine mehrschichtige Folie, umfassend wenigstens eine Schicht, die aus einer hierin beschriebenen erfindungsgemäßen Folie besteht. In einer Ausführungsform handelt es sich um eine mehrschichtige Folie, die eine erfindungsgemäße vorangehend beschriebene Folie als eine Schicht aufweist, die entweder nur auf einer Seite oder auf beiden Seiten eine Außenschicht aufweist, die ein oder mehrere teilkristalline alpha-Olefinpolymere enthält, wobei insbesondere teilkristallines Polypropylen, wie es vorstehend beschrieben ist, bevorzugt ist. Die mehrschichtigen Folien weisen dabei bevorzugt dieselben Eigenschaften, insbesondere bezüglich Schrumpf und Oberflächenrauheit, wie die einschichtigen Folien auf. Coextrudierte mehrschichtige Folien mit mindestens einer Polypropylen-Außenschicht und mindestens einer Schicht, die die Zusammensetzung der vorbeschriebenen erfindungsgemäßen Folien aufweisen, haben den Vorteil, dass deren Oberflächeneigenschaften sich mit bekannten, bei Polypropylen-Kondensatorfolien üblichen Techniken einstellen lassen, z.B. durch gezielte Steuerung der Kristallisation und gezielter Ausbildung von Sphäruliten und dass sich durch die Anwesenheit zumindest einer Schicht der vorbeschriebenen erfindungsgemäßen Folien mechanische und elektrische Eigenschaften dieser Mehrschichtfolien bei höheren Temperaturen verbessern lassen.

Besonders bevorzugt sind Mehrlagenfolien, die eine mittlere Schicht umfassen, die ein teilkristallines alpha-Olefinpolymer, wie vorstehend beschrieben, enthält und zwei Außenschichten aufweisen, die je aus einer erfindungsgemäßen hierin beschriebenen Folie gebildet sind. Ganz besonders bevorzugt enthält die mittlere Schicht dabei ausschließlich teilkristallines Polypropylen, wie es hierin beschrieben ist. Dadurch ergibt sich eine Folie mit verbesserter Temperaturstabilität durch die Au-ßenschichten, bei sehr guten dielektrischen Eigenschaften, da 100% Polypropylen in der Mittellage diese wesentlich beeinflusst. Am meisten bevorzugt, sind solche Folien, die außer der mittleren Schicht und den Außenschichten keine weiteren Schichten aufweist. Die Folie kann jedoch zusätzlich eine Metallisierung aufweisen, wie im Folgenden ausgeführt wird.

Eine weitere Ausführungsform der erfindungsgemäßen Folie ist eine beschichtete Folie. Hierbei handelt es sich um eine Folie, bei der wenigstens eine Außenschicht mit einem Material beschichtet worden ist. Unter Beschichtung in diesem Sinne ist zu verstehen, dass die Beschichtung nicht bei der Extrusion der Folie erzeugt worden ist. Die Beschichtung kann nach der Herstellung der Folie in einem getrennten Verfahren auf die fertige Folie aufgebracht werden. Eine bevorzugte Ausführungsform ist eine erfindungsgemäße Folie, die zumindest auf einer Seite mit einer leitenden Schicht beschichtet ist. Eine weitere Ausführungsform der vorliegenden Erfindung ist daher eine erfindungsgemäße Folie, wobei die Folie auf einer oder beiden Seiten metallisiert ist.

Für die Verwendung in Folienkondensatoren ist eine Metallisierung erforderlich. Am meisten bevorzugt ist daher eine einseitig mit einer Metallschicht beschichtete Folie. Hierzu kann die Folienoberfläche nach der Verstreckung mittels Coronabehandlung aktiviert werden und dann eine Metallschicht aufgetragen werden. Auch erfindungsgemäße doppelseitig metallisierte Folien sind Teil der vorliegenden Erfindung.

Ein weiterer Gegenstand der vorliegenden Erfindung ist ein Kondensator, der dadurch gekennzeichnet ist, dass er eine in dieser Beschreibung beschriebene Folie umfasst. Die erfindungsgemäßen Kondensatoren weisen bei einer Foliendicke von 3,8um bevorzugt eine elektrische Durchschlagsfestigkeit von größer oder gleich 500V/µm auf, nach DIN EN 60243-2 gemessen unter Gleichspannung bei 23°C und bei einer Foliendicke von 2,7µm von größer oder gleich 400V/µm. Ferner weisen die erfindungsgemäßen Folien und Kondensatoren bevorzugt einen dielektrischen Verlustfaktor von kleiner oder gleich 1 bis 2*10⁻⁴ auf, gemessen bei einer Frequenz im Bereich von 1 kHz und von 1 GHz bei einer Temperatur von 25°C. Der Verlustfaktor wird nach DIN EN 60674-2 (VDE) bestimmt. Ferner ist es bevorzugt, wenn der Kondensator eine Folie umfasst, die eine Dielektrizitätskonstante im Bereich von 2 bis 2,5 aufweist. Die Dielektrizitätskonstante wird ebenfalls nach DIN EN 60674-2 (VDE) bestimmt.

Ein weiterer Gegenstand der vorliegenden Erfindung ist ein Verfahren zur Herstellung einer erfindungsgemäßen Folie umfassend die folgenden Schritte:
- Erzeugung, insbesondere mittels Extrusion, eines Films enthaltend wenigstens zwei Cycloolefinpolymere und wenigstens ein teilkristallines alpha-Olefinpolymer,
- Recken des Films in Längsrichtung (MD) und in Querrichtung (TD), um eine biaxial verstreckte Folie zu erhalten, und
- Aufwickeln der biaxial verstreckten Folie.

Die zur Folie genannten Merkmale und Vorteile gelten gleichermaßen für das Verfahren und umgekehrt.

Vorzugsweise beträgt das Flächenreckverhältnis der biaxial verstreckten Folie, insbesondere der aufgewickelten Folie, wenigstens 40.

Das Recken kann in Längsrichtung und in Querrichtung gleichzeitig erfolgt oder das Recken kann zunächst in Längsrichtung erfolgen und die in Längsrichtung verstreckte Folie kann anschließend in Querrichtung gereckt werden.

Zur Verbesserung der Eigenschaften der Folie können nach dem Recken und vor dem Aufwickeln einer oder mehrere der folgenden weiteren Schritte durchgeführt werden:
- Wärmebehandlung der biaxial verstreckten Folie,
- Relaxierung der biaxial verstreckten Folie, wodurch das Flächenreckverhältnis gezielt verringert wird.

Beispielsweise beträgt das Flächenreckverhältnis auch nach der Relaxierung wenigstens 40.

Die Verfahren werden im Folgenden genauer beschrieben:

### (1) Rezeptur & Dosierung

Der Rohstoff zur Herstellung der erfindungsgemäßen Folien kann als eine Möglichkeit als Compound bereitgestellt werden, der teilkristalline alpha-Olefinpolymere und Cycloolefinpolymere enthält. Auch kann eine Batch-Dosierung angewendet werden, bei der die teilkristallinen alpha-Olefinpolymere und Cycloolefinpolymere gemäß Rezeptur unmittelbar vor der Beschickung des Extruders zusammengemischt werden. Als Rohstoff wird ein Kunststoffgranulat oder Pulver eingesetzt.

Wenn die Folie mehrere Schichten aufweist, kann für jede Schicht ein eigener Rohstoff bereitgestellt werden. Je nach gewünschter Dicke einer jeden Schicht wird der Rohstoff für jede Schicht gesondert dosiert.

Für die in diesem Verfahren verwendeten alpha-Olefinpolymere und Cycloolefinpolymere gilt das vorstehend für die erfindungsgemäße Folie gesagte.

### (2) Extrusion

Der Rohstoff oder die Rohstoffe werden einem Extruder zugeführt. Im Extruder werden sie gemischt und aufgeschmolzen. Wenn die Folie nur eine Schicht aufweist, wird nur ein Extruder benötigt.

Wenn die Folie mehrere Schichten aufweist, wird in der Regel für jede Schicht ein eigener Extruder verwendet. Es können jedoch auch mehrere Schichten aus demselben Kunststoffgranulat hergestellt werden, wenn zwei oder mehr Schichten dieselbe Zusammensetzung aufweisen. Dann kann das Material für zwei oder mehr dieser Schichten aus demselben Extruder extrudiert werden. Ferner können alle Schichten aus einem Extruder extrudiert werden, wenn alle Schichten dieselbe Zusammensetzung aufweisen. Es kann jede beliebige Art von Extruder eingesetzt werden.

Bevorzugt ist der Extruder oder sind die Extruder ausgesucht aus der Gruppe bestehend aus Einschneckenextruder, Kaskadenextruder, und Zweischneckenextruder.

Es können auch andere Misch- und Aufbereitungsaggregate, wie z. B. ein Buskneter oder ein Planetwalzenextruder verwendet werden. Die Extruder werden bevorzugt bei einer Temperatur im Bereich von 230 bis 280 °C, besonders bevorzugt bei einer Temperatur im Bereich von 240 bis 270 °C betrieben.

### (3) Düse und Kühlwalze

Die Schmelze wird über eine Breitschlitzdüse ausgetragen und auf einer Kühlwalze abgelegt. Wenn die Folie mehrere Schichten aufweist, wird bevorzugt eine Mehrlagendüse verwendet.

Bevorzugt wird eine Vorrichtung für das Anlegen des Films an die Kühlrolle (Pinningsystem) verwendet, um das Anlegen der Folie an die Kühlwalze zu verbessern. Eine bevorzugte Vorrichtung ist ein Luftmesser, also ein gerichteter Luftstrom, der eine Kraft auf den Film in Richtung der Kühlwalze ausübt.

Ein Pinningsystem führt zu einem gleichmäßigeren Kontakt zwischen dem Film und der Kühlwalze und damit zur Ausbildung einer glatten und ebenen Gießfolie.

Die Temperatur der Kühlwalze liegt bevorzugt im Bereich von 80 bis 100 °C, bevorzugt von 85 bis 95°C und am meisten bevorzugt von 90 bis 95°C. Zur Einstellung der gewünschten Rauheit wird bei dünneren Folien eine höhere Temperatur innerhalb der angegebenen Temperaturbereiche gewählt. Bei einer Foliendicke von 3,8um, wie sie in den Beispielen hergestellt wurden ist der Bereich von 90 bis 95°C am geeignetsten, insbesondere eine Temperatur von 93°C.

### (4) Verstrecken

Die so hergestellte Gießfolie wird anschließend in Längsrichtung (machine direction; MD) und in Querrichtung (transverse direction; TD) verstreckt.

Im erfindungsgemäßen Verfahren liegt das Verstreckungsverhältnis in Längsrichtung beispielsweise im Bereich von 3,0 bis 7,0, bevorzugt im Bereich von 5,0 bis 7,0.

Im erfindungsgemäßen Verfahren liegt das Verstreckungsverhältnis in Querrichtung bevorzugt im Bereich von 7,0 bis 13,0, bevorzugt im Bereich von 8,0 bis 11,0.

Das biaxiale Orientieren oder Verstrecken in Längsrichtung und in Querrichtung kann hintereinander erfolgen - in diesem Fall spricht man von sequentiellem Verstrecken - oder die Folie wird gleichzeitig in Längs- und Querrichtung verstreckt - in diesem Fall spricht man von simultanem Verstrecken.

### (4.1) Sequentielles Verstrecken

Das sequentielle Verstrecken wird bevorzugt wie folgt durchgeführt.

### a) Verstrecken in Längsrichtung

Beispielsweise wird der wie vorstehend beschrieben hergestellte Gießfilm (Castfilm) zunächst in Längsrichtung verstreckt. Hierzu wird der Gießfilm einer Längsreckanlage - auch MDO (machine direction orienter) genannt - zugeführt und nach ausreichender Erhitzung in Maschinenrichtung verstreckt. Die Folie wird in der Längsreckanlage beispielsweise zwischen Walzenpaaren mit unterschiedlicher Rotationsgeschwindigkeit verstreckt.

Eine solche Längsreckanlage ist beispielsweise in der DE102011109385A1 offenbart.

### b) Verstrecken in Querrichtung

Das Verstrecken in Querrichtung erfolgt bevorzugt zeitlich nach dem Verstrecken in Längsrichtung. Beim Verstrecken in Querrichtung wird die in Längsrichtung verstreckte Folie einer Querreckanlage 10 - TDO (transverse direction orienter) genannt - zugeführt.

Querreckanlagen 10, wie sie in Figur 1 schematisch dargestellt sind, weisen üblicherweise einen Ofen 14 sowie zwei Transportschienen 16 für die Folie auf.

Die Transportschienen 16 sind gegenüber einer Symmetrieachse S der Reckanlage 10 spiegelsymmetrisch angeordnet und erstrecken sich zumindest teilweise im Ofen 14. In einer Einlaufzone 18 sowie einer Auslaufzone 20, in denen die Materialbahn 12 der Reckanlage 10 zu- bzw. abgeführt wird, verlaufen die Transportschienen 16 außerhalb des Ofens 14.

Neben der Einlaufzone 18 und der Auslaufzone 20 weist die Querreckanlagen 10 zumindest drei weitere Zonen 22, 24, 26 auf.

Die Zonen 22, 24, 26 grenzen aneinander an, sodass - entlang der Längsrichtung bzw. der üblichen Abzugsrichtung R der Querreckanlagen 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Querreckanlage 10, auch Vorheizzone genannt, haben die Transportschienen 16 einen ersten Abstand zueinander.

In der zweiten Zone 24, auch Reckzone genannt, vergrößert sich der Abstand der beiden Transportschienen 16 zueinander, bis schließlich zu Beginn der dritten Zone 26, auch Wärmebehandlungszone genannt, ein zweiter Abstand erreicht ist.

An jeder der Transportschienen 16 sind in an sich bekannter Weise eine Vielzahl von Kluppeneinheiten 28 geführt. Die Kluppeneinheiten 28 können durch einen geeigneten Antrieb entlang der Transportschiene 16 bewegt werden.

Eine solche Querreckanlage 10 ist beispielsweise aus der WO2014094803A1 bekannt.

Zum Querverstrecken wird der Querreckanlage 10 die bereits in Längsrichtung verreckte Folie in der Einlaufzone 18 der Reckanlage 10 in Abzugsrichtung R zugeführt. Dies geschieht beispielsweise dadurch, dass die Folie mit ihren Längskanten in Abzugsrichtung in die Kluppeneinheiten 28 der an der entsprechenden Seite vorgesehenen Transportschiene 16 eingelegt wird und die Kluppeneinheiten 28 geschlossen werden. Dieser Vorgang wird auch "einkluppen" genannt. Dadurch greifen die Kluppeneinheiten 28 die Folie und bewegen diese in bzw. durch den Ofen 14 der Querreckanlage 10.

In der Einlaufzone 18 hat die Folie 12 eine Breite E senkrecht zur Abzugsrichtung R, die in etwa dem ersten Abstand zwischen den Transportschienen 16 entspricht.

Die Folie 12 wird dann durch die erste Zone 22 geführt und dort erwärmt.

In der anschließenden zweiten Zone 24, also der Reckzone, wird die Folie 12 in Querrichtung verstreckt, da sich der Abstand der Transportschienen 16 kontinuierlich vergrößert. Dadurch wird die Folie 12 dünner und breiter. Zum Ende der zweiten Zone 24 weist die Folie 12 eine zweite Breite auf.

Nach erfolgter Reckung durchläuft die Folie 12 nun die dritte Zone 26, bei der eine Relaxierung der Folie 12 erfolgen kann, bevor die Folie 12 in der Auslaufzone 20 von den Kluppeneinheiten 28 gelöst wird und sie die Querreckanlagen 10 mit der Breite verlässt.

### (4.2) Simultanes Verstrecken

Das simultane Verstrecken wird beispielsweise wie folgt durchgeführt, vorzugsweise mittels einem Pantograph-Verfahren, Spindelverfahren, LISIM-Verfahren oder MESIM-Verfahrens. Die Foliengeschwindigkeit beträgt hierbei bis zu 250 m/min.

Der Aufbau einer Simultanreckanlage entspricht in Bezug auf die verschiedenen Zonen und der grundlegenden Anordnung der Schienen im Ofen dem zuvor zur Querreckanlage beschriebenen Aufbau. Unterschiede zwischen einer Querreckanlage und einer Simultanreckanlage bestehen in den Längen der Zonen und/oder Temperaturen in den Zonen. Zudem unterscheidet sich das Transportsystem darin, dass die Kluppeneinheiten in Simultanreckanlagen an den Schienen einzeln beschleunigt werden können, beispielsweise mittels Linearmotoren, um die Folie in Längsrichtung zu verstrecken. Eine solche Simultanreckanlage ist zum Beispiel in der WO2015007367A1 beschrieben, insbesondere in den Absätzen [0045] bis [0055].

Beim Simultanverstrecken läuft der unverstreckte Gießfilm in die Einlaufzone der Simultanreckanlage wird dort wie zuvor beschrieben in den Kluppeneinheiten eingekluppt.

Die Folie wird dann der ersten Zone zugeführt und dort erwärmt.

Anschließend wird die Folie in die zweite Zone, also der Reckzone geführt, um hier gleichzeitig in Längs- und Querrichtung verstreckt zu werden.

Ähnlich wie zur Querreckanlage beschrieben, erfolgt das Querverstrecken der Folie dadurch, dass sich der Abstand der Transportschienen zueinander in der Reckzone vergrößert, wodurch die Breite der Folie vergrößert wird.

Im Unterschied zur Querreckanlage werden in der Reckzone die Kluppeneinheiten 28 gegenüber der Antriebsgeschwindigkeit in der Einlaufzone auf eine höhere Geschwindigkeit, auch Reckgeschwindigkeit genannt, beschleunigt. Dadurch wird die Folie auch in Längsrichtung gereckt.

In anderen Worten nimmt der Abstand der Kluppeneinheiten in der Reckzone sowohl in Längsrichtung als auch in Querrichtung zu, sodass die Folie gleichzeitig in Längs- und in Querrichtung verstreckt wird. Die Abstände der Kluppeneinheiten werden dabei im Verhältnis der gewünschten Reckverhältnisse in Längs- und Querrichtung vergrößert.

Anschließend durchläuft die biaxial verstreckte Folie, wie zur Querreckanlage beschrieben, eine dritte Zone, in der eine Wärmebehandlung bzw. Relaxierung der Folie erfolgt. Dabei kann der Abstand in Querrichtung von gegenüberliegenden Kluppeneinheiten verringert werden. Auch die Geschwindigkeiten der Kluppeneinheiten können gegenüber der Reckzone verringert werden.

In der Auslaufzone wird die Folie durch geeignete Mittel ausgekluppt und verlässt dann die Simultanreckanlage.

### (5) Wärmebehandlung

Bevorzugt wird die Folie nach dem Verstrecken einer Wärmebehandlung (auch Stabilisierung oder Annealing genannt) unterzogen. Dazu wird die Folie für eine bestimmte Zeit bei erhöhter Temperatur gehalten. Dies geschieht bevorzugt direkt im Anschluss an das Verstrecken in der dritten Zone der Querreckanlage bzw. der Simultanreckanlage.

Während der Wärmebehandlung werden Spannungen innerhalb der Folie abgebaut, die durch das Verstrecken entstanden sind. Hierdurch werden die Eigenschaften über die gesamte Fläche der Folie vereinheitlicht.

### (6) Relaxierung

Bevorzugt wird während der Wärmebehandlung eine Relaxierung der Folie durchgeführt. Dies bedeutet, dass die Spannung auf die Folie reduziert wird, wodurch das Reckverhältnis gezielt verringert wird.

Beim sequentiellen Verstrecken wird die Folie nur in Querrichtung relaxiert, beispielsweise dadurch, dass sich der Abstand der Transportschienen in der dritten Zone verringert.

Beim simultanen Verstrecken erfolgt eine Relaxierung insbesondere sowohl in Längs- als auch in Querrichtung. Zum Beispiel wird der Abstand in Querrichtung von gegenüberliegenden Kluppeneinheiten verringert und die Geschwindigkeiten der Kluppeneinheiten werden im Ausmaß der gewünschten Relaxierung gegenüber den Geschwindigkeiten in der Reckzone verringert.

Es ist weiterhin vorteilhaft, wenn der Umfang der Relaxierung im erfindungsgemäßen Verfahren im Bereich von 2 % und 15 % liegt, bevorzugt im Bereich von 7 bis 12 %. Bei einer simultanen Verstreckung gilt dies bevorzugt für beide Richtungen. Durch die Relaxierung wird der Schrumpf der Folie reduziert.

### (7) Aufwickeln

Nachdem die Folie die biaxial verstreckt wurde, wird die Folie aufgewickelt.

Hierzu wird zuvor der Rand der Folie in Längsrichtung abgeschnitten, der von den Kluppeneinheiten gegriffen wurde.

Gegebenenfalls kann die Oberfläche der Folie noch vor dem endgültigen Aufwickeln behandelt werden, wenn dies gewünscht bzw. notwendig ist.

Schließlich wird die Folie auf einem Wickler aufgewickelt.

### (8) Weiterbehandlung

Die so hergestellte biaxial orientierte Folie gemäß der vorliegenden Erfindung kann durch weitere Arbeitsschritte weiterbehandelt werden.

Zum Beispiel kann die Folie vor der Weiterbehandlung zu Schnittrollen konfektioniert werden.

Weitere mögliche Behandlungsschritte sind unter anderem Metallisierung, Laminierung, Kaschierung, Beschichten (Barriere, Schutz), Bedrucken, Oberflächenbehandlung, Laserbearbeitung, Lackierung etc. Bevorzugt werden die Folien metallisiert.

Ein weiterer Gegenstand der vorliegenden Erfindung ist die Verwendung einer Folie, insbesondere einer metallisierten Folie, wie in dieser Beschreibung beschrieben, als Dielektrikum zur Herstellung von Kondensatoren.

Kurze Beschreibung der Figuren:
Figur 1 zeigt schematisch eine Querreckanlage.
Figur 2 zeigt links eine mikroskopische Aufnahme der Oberfläche einer erfindungsgemäßen Folie, die während der Herstellung der Kühlwalze zugewandt war und rechts die Gegenseite.
Figur 3 zeigt die maximal möglich Reckrate in Längsrichtung (MDx) für Folien bei einer Foliendicke von 3,8um, welche nur ein Cycloolefinpolymer enthalten, sowohl für sequentielles Recken als auch für simultanes Recken.

### Abkürzungsverzeichnis:

- BO: biaxial orientiert
- BOPP: biaxial orientiertes Polypropylen
- COC: Cycloolefinpolymer, im speziellen Cycloolefincopolymer
- MD: Längsrichtung, Laufrichtung, Maschinenrichtung (machine direction)
- PP: Polypropylen
- TD: Querrichtung, Quer zur Maschinenrichtung (transversal direction)
- Tg: Glasübergangstemperatur

### Beispiele:

### Messmethoden:

Foliendicken: DIN 53370; Schichtdicken: DIN EN ISO 3146; Kristallitschmelztemperatur, Glasübergangstemperatur und Kristallisationsgrad: ISO 11357-1,-2,-3 (DSC, Aufheizgeschwindigkeit 10 K/min); Schmelzflussindex: ISO 1133; Wärmeschrumpf: DIN ISO 11501; Oberflächenrauheit: DIN EN ISO 4287; Elektrische Durchschlagsfestigkeit: DIN EN 60243-2; Verlustfaktor und Dielektrizitätskonstante: DIN EN 60674-2 (VDE).

### Materialien:

Polypropylen: Borclean^{®} HC300BF (Kristallitschmelztemperatur 164°C; Schmelzflussindex (230°C/2.16 kg): 3,3 g/10min); metallisierbares PP für dielektrische Filme für Kondensatoren; extrem hohe Reinheit, Aschegehalt < 20 ppm, Gehalt an Metallen:
Titan <3 ppm, Aluminium <3 ppm, Chlorid < 3 ppm;
Cyclopolyolefinpolymer 1 (COC1): Topas COC 6013 M07
   Copolymer aus Norbornen und Ethylen
   Glasübergangstemperatur 142°C,
   Schmelzflussindex (260°C, 2,16 kg) 13,26 g/10min
Cyclopolyolefinpolymer 2 (COC2): Topas COC 6015 S04
   Copolymer aus Norbornen und Ethylen
   Glasübergangstemperatur 158°C
   Schmelzflussindex (260°C, 2,16 kg) 4,08 g/10min

Herstellen der erfindungsgemäßen Folien:
Polypropylen, Cycloolefinpolymer 1 und Cycloolefinpolymer 2 in Form von Granulaten werden mit Hilfe eines Doppelschneckenextruders bei 250 bis 260 °C aufgeschmolzen (Batch-Dosierung) und mittels einer Breitschlitzdüse auf eine Kühlwalze gegeben. Zur Unterstützung des Andrucks der Folie an die Kühlwalze wurde ein übliches Hochdruck-Luftmesser eingesetzt. Die Temperatur der Oberfläche der Kühlwalze wird auf eine Temperatur im Bereich von 90 bis 95°C gehalten. Ein Kühlbad wurde nicht verwendet.

Die Folien werden einer Simultanreckanlage zugeführt (nur Beispiele 1, 3, 4 und 5). Die Simultanreckanlage ist in Heizzonen eingeteilt, worin die Folie auf die in Tabelle 1 gezeigten Temperaturen erwärmt wird. Die Folien werden von oben und unten gleichermaßen beheizt. Die zuvor beschriebene erste Zone 22, zweite Zone 24 und dritte Zone 26 sind im Folgenden in verschiedene Heizzonen aufgeteilt.

**Tabelle 1: Wärmeprofil beim Recken (simultan; LISIM-Verfahren)**

| Heizzone | Temperatur [°C] | Verarbeitungsschritt |
|---|---|---|
| 1-2 | 170 | Vorheizen |
| 3 | 171 - 172 | Vorheizen |
| 4 | 172 - 173 | Reckzone |
| 5 | 174 | Reckzone |
| 6 | 168 | Annealing / Relaxierung |
| 7 | 170 - 172 | Annealing / Relaxierung |
| 8 | 172 | Annealing / Relaxierung |
| 9 | 166 - 164 | Annealing / Relaxierung |

In Beispielen 1, 4 und 5 wird die Folie mittels simultaner Verstreckung in Längsrichtung um einen Faktor 6.1 gereckt und in Querrichtung um einen Faktor 9,9. Die Relaxierung (Entspannung) erfolgt in Längs- und in Querrichtung um einen Betrag von 10%. Damit beträgt die effektive Reckrate in Längsrichtung 5,5 und in Querrichtung 9 und das Flächenreckverhältnis 50. In Beispiel 3 wurde eine Reckrate in Längsrichtung von 5 verwendet.

In Beispiel 2 wurde eine sequenzielle Verstreckung angewendet. Hierzu wurde die Folie zunächst einer Längsreckanlage (MDO) zugeführt. In der Längsreckanlage wird die Folie über Walzen geleitet, die beheizt sind und unterschiedliche Geschwindigkeiten aufweisen und so die Folie in Längsrichtung recken. Die Walzen weisen die in Tabelle 2 gezeigten Temperaturen auf.

**Tabelle 2 (MDO):**

| Walzen | Temperatur [°C] | Verarbeitungsschritt |
|---|---|---|
| 1 | 104 | Vorheizen |
| 2 | 114 | Vorheizen |
| 3 | 130 | Vorheizen |
| 4 | 134 | Vorheizen |
| 5 | 138 | Vorheizen |
| 6 | 140 | Vorheizen |
| 7 | 150 | Streckzone |
| 8 | 150 | Streckzone |
| 9 | 124 | Streckzone |
| 10 | 124 | Streckzone |
| 11 | 127 | Annealing |
| 12 | 127 | Annealing |

Anschließend wird die in Längsrichtung gereckte Folie in Querrichtung gereckt. Hierzu wird sie einer Querreckanlage (TDO) zugeführt. Hier wird die Folie in einer Vorheizzone (erste Zone 22) noch einmal vorgeheizt, in der Reckzone (zweite Zone 24) verstreckt und in einer dritten Zone 26 Wärmebehandelt (sog. annealing) und in Querrichtung um 10% relaxiert. In den verschiedenen Zonen wird die Folie auf die in Tabelle 3 gezeigten Temperaturen erwärmt. Die Folien werden von oben und unten gleichermaßen beheizt.

**Tabelle 3 (TDO):**

| Zonen | Temperatur [°C] | Verarbeitungsschritt |
|---|---|---|
| 1 | 182 | Vorheizen |
| 2 | 180 | Vorheizen |
| 3 | 178 - 176 | Vorheizen |
| 4 | 174 - 173 | Reckzone |
| 5 | 172 - 171 | Reckzone |
| 6 | 170 | Annealing |
| 7 | 172 | Annealing |
| 8 | 172 | Annealing |
| 9 | 166 - 162 | Annealing |

Um eine stabile Folienherstellung gewährleisten zu können, mussten Abrisse vermieden werden. Hierzu war in Beispielen 2 und 3 eine Reduzierung des Flächenreckverhältnisses durch Reduzierung der Reckrate in Längsrichtung notwendig. In Beispiel 2 wurde eine Reckrate in Längsrichtung von 3,7 verwendet.

Es wurden 2 erfindungsgemäße Folien angefertigt und 3 Vergleichsversuche durchgeführt. Die Daten der Folien sind der unten stehenden Tabelle 4 zu entnehmen.

**Tabelle 4: Zusammensetzung und Eigenschaften**

| Beispiel | 1* | 2* | 3* | 4 | 5 |
|---|---|---|---|---|---|
| Gehalt Polypropylen | 80 | 80 | 75 | 80 | 80 |
| Gehalt COC 1 | 20 | 20 | 25 | 16, 8 | 10 |
| Gehalt COC 2 | 0 | 0 | 0 | 3,2 | 10 |
| Tg [°C] | 142 | 142 | 142 | 145** | 150** |
| Art der Verstreckung*** | sim | seq | sim | sim | sim |
| Flächenreckverhältnis | 50 | 34 | 45 | 50 | 50 |
| Endfoliendicke [pm] | 3, 8 | 3, 8 | 3, 8 | 3, 8 | 3, 8 |
| | | | | | |
| Rauheit (MD) Ra [pm] | 0, 09 | 0, 06 | 0, 04 | 0, 06 | 0, 09 |
| Rauheit (MD) Rmax [pm] | 0, 9 | 0, 05 | 0,4 | 0,7 | 0,7 |
| Rauheit (TD) Ra [pm] | 0, 09 | 0, 07 | 0, 05 | 0, 06 | 0, 09 |
| Rauheit (TD) Rmax [pm] | 0, 9 | 0, 9 | 0,5 | 0, 6 | 0, 9 |
| Durchschlagsspannung[V] | 560 | 520 | 550 | 560 | 600 |

| Schrumpf (120°C/5min) | | | | | |
|---|---|---|---|---|---|
| MD [%] | 1,7 | 1,0 | 1,3 | 1,0 | 1,0 |
| TD [%] | 0 | 0 | 0 | 0 | 0 |

| Schrumpf (130°C/5min) | | | | | |
|---|---|---|---|---|---|
| MD [%] | 2,6 | 2, 0 | 2,1 | 2, 0 | 1,8 |
| TD [%] | 0 | 0 | 0 | 0 | 0 |

| Schrumpf (140°C/5min) | | | | | |
|---|---|---|---|---|---|
| MD [%] | 4,7 | 3,2 | 3,7 | 3, 8 | 4,4 |
| TD [%] | 0,3 | 0,2 | 0,3 | 0 | 0 |

| | | | | | |
|---|---|---|---|---|---|
| * Vergleichsversuche ** Gewichtetes arithmetisches Mittel des Tg von COC1 und COC2 *** sim = simultan; seq = sequentiell | | | | | |

In Beispiel 1 und Beispiel 3 wurde gemäß dem Stand der Technik (WO 2018/197034 A1) nur ein Cycloolefinpolymer eingesetzt und die Menge des Polymers im Polymer-Blend erhöht, um die Temperaturfestigkeit zu steigern. Es zeigt sich, dass bei Steigerung des Cycloolefinpolymer-Anteils um nur 5 Gewichtsprozente bei der simultanen Verstreckung eine Reduzierung des Flächenreckverhältnisses erforderlich wird, um eine stabile Produktion (genügende Laufstabilität) zu gewährleisten. Nur so können lange Folienbahnen ohne Folienriss erzeugt werden. Insbesondere das Recken in Maschinenrichtung muss reduziert werden. Wie man der WO 2018/197034 A1 entnehmen kann, kann statt der Reduktion der Reckraten auch die Foliendicke erhöht werden, um ein Reißen der Folie während der Produktion zu verhindern. Große Foliendicken sind jedoch bei Folien für Kondensatoren von Nachteil, da die Kondensatoren bei gleicher Kapazität, bei dicken Folien ein höheres Volumen aufweisen. Da bei vielen Anwendungen, auch im Automobilbau, der Bauraum stark eingeschränkt ist, ist dies von Nachteil. In den erfindungsgemäßen Beispielen 4 und 5 ist ein Verringern des Flächenreckverhältnisses bei gleicher Foliendicke nicht notwendig. Zusätzlich bietet Beispiel 5 eine um etwa 10% erhöhte Durchschlagsspannung.

Wie die Tabelle 4 zeigt sind die Werte für den Schrumpf bei 140°C in Querrichtung in den erfindungsgemäßen Beispielen ebenfalls leicht verbessert gegenüber den nicht erfindungsgemäßen Beispielen.

Um die Effekte der vorliegenden Erfindung auf die elektrischen Eigenschaften der Folien zu untersuchen, wurden die erhaltenen Folien einer typischen Metallisierung für Kondensatorfolien unterzogen (Profilmetallisierung für DC-Link Anwendungen) und es wurden aus jeder metallisierten Folie Kondensatoren hergestellt. Die Kondensatoren wurden bei 125°C und bei 135°C in einem Wärmeschrank für 3000 Stunden verschiedenen Testspannungen ausgesetzt. Dadurch ergeben sich verschiedene Feldstärken, die in der Tabelle angegeben sind. Die Feldstärke ist der Quotient aus Spannung in [V] und der Foliendicke [pm] (hier 3,8pm). Wurde ein Kurzschluss gemessen, so wurde der Kondensator als Ausfall gezählt. In definierten Zeitabständen (1000 Stunden/2000 Stunden/3000 Stunden) wurden Kapazitätsdrift (dC/C) und Veränderung des Verlustfaktors der Kondensatoren untersucht. Bei starken Abweichungen dieser Daten von den Ausgangswerten wurden auch diese Kondensatoren als Ausfälle gezählt. Tabelle 5 zeigt die Ergebnisse der Versuche. Beispiele 1 bis 3 sind Vergleichsversuche.

**Tabelle 5: elektrische Eigenschaften**

| Beispiel | 125°C | | 135°C | | |
|---|---|---|---|---|---|
| | 200V/µm* | 250V/µm* | 140V/µm* | 180V/µm* | 200V/µm* |
| 1 | - | Ausfall | Ausfall | Ausfall | - |
| 2 | Ausfall | | - | | |
| 3 | - | Ausfall | - | - | Ausfall |
| 4 | OK | | OK | - | Ausfall |
| 5 | OK | | OK | | |

| | | | | | |
|---|---|---|---|---|---|
| * Feldstärke OK = Die Kondensatoren waren nach 3000 Stunden noch innerhalb aller Grenzwerte Ausfall = Ausfall durch Kurzschluss oder wegen hohem Kapazitätsdrift oder zu hohem Verlustfaktor - nicht bestimmt | | | | | |

Wie man Tabelle 5 entnehmen kann haben die erfindungsgemäßen Folien deutlich überlegene elektrische Eigenschaften bei hohen Temperaturen. Die erfindungsgemäßen Folien der Beispiele 4 und 5 bestehen die Tests bei einer Temperatur von 125°C und Feldstärken von 200V/µm und 250V/µm völlig ohne Ausfall. Die Folien der Vergleichsversuche 1 bis 3 fallen bei 250V/µm alle aus und bei 200V/µm besteht den Test nur die Folie von Vergleichsversuch 1. Die Folie von Vergleichsversuch 3 wurde bei 200V/µm nicht gemessen, wird aber bei 125°C und 250V/µm durch Kurzschluss unbrauchbar.

Bei 135°C bestehen die Folien der Vergleichsversuche keinen der durchgeführten Versuche. Die Folie von Beispiel 5 besteht die Tests bei allen Feldstärken und die Folie von Beispiel 4 besteht noch bei einer Feldstärke von 140V/µm. Sie fällt erst bei 200V/µm durch zu hohen Kapazitätsdrift aus. Die erfindungsgemäßen Folien haben daher bei hohen Temperaturen deutlich bessere elektrische Eigenschaften. Im Gegensatz zu den Kondensatoren nach dem Stand der Technik sind diese daher in der Autoindustrie bei Hochtemperaturanwendungen einsetzbar.

## Patentansprüche

1. Biaxial orientierte Folie enthaltend
a) wenigstens 2 Cycloolefinpolymere und
b) wenigstens ein teilkristallines alpha-Olefinpolymer,
wobei die Summe der Anteile aller Cycloolefinpolymere in der Folie im Bereich von 1 bis 25 Gewichtsprozenten liegt und alle in der Folie enthaltenen Cycloolefinpolymeren eine Glasübergangstemperatur im Bereich von 120 bis 180°C aufweisen und die Folie wenigstens ein erstes Cycloolefinpolymer und ein zweites Cycloolefinpolymer enthält, wobei das zweite Cycloolefinpolymer eine höhere Glasübergangstemperatur aufweist, als das erste Cycloolefinpolymer und
wobei die Summe der Anteile aller teilkristallinen alpha-Olefinpolymere in der Folie im Bereich von 75 bis 99 Gewichtsprozenten liegt und alle in der Folie enthaltenen teilkristallinen alpha-Olefinpolymere eine Kristallitschmelztemperatur im Bereich von 150 bis 170°C aufweisen und
wobei das gewichtete arithmetische Mittel der Glasübergangstemperaturen aller in der Folie enthaltenen Cycloolefinpolymere kleiner oder gleich dem gewichteten arithmetischen Mittel der Kristallitschmelztemperatur aller in der Folie enthaltenen teilkristallinen alpha-Olefinpolymere ist,
wobei die Glasübergangstemperatur und die Kristallitschmelztemperatur nach ISO 11357 per Differential-Scanning-Kalorimetrie (DSC) mit einer Aufheizgeschwindigkeit von 10K/min gemessen sind, und
wobei alle Mengenangaben auf die gesamte Masse der Folie bezogen sind.

2. Folie gemäß Anspruch 1, wobei die Folie nur ein teilkristallines alpha-Olefinpolymer enthält und das gewichtete arithmetisches Mittel der Glasübergangstemperaturen aller in der Folie enthaltenen Cycloolefinpolymere kleiner oder gleich der Kristallitschmelztemperatur des teilkristallinen alpha-Olefinpolymer ist.

3. Folie gemäß einem der Ansprüche 1 oder 2 wobei die Folie nur ein teilkristallines alpha-Olefinpolymer enthält, bei dem es sich um Polypropylen handelt;
und/oder
wobei alle Cycloolefinpolymere Copolymere sind, die Norbornen und Ethylen als Monomere enthalten;
und/oder
wobei die Summe der Anteile aller Cycloolefinpolymere in der Folie im Bereich von 10 bis 25 Gewichtsprozenten liegt und die Summe der Anteile aller teilkristallinen alpha-Olefinpolymere in der Folie im Bereich von 75 bis 90 Gewichtsprozenten liegt; und/oder
wobei das zweite Cycloolefinpolymer eine um wenigstens 3°C höhere Glasübergangstemperatur aufweist, als das erste Cycloolefinpolymer.

4. Folie gemäß einem der vorangehenden Ansprüche, wobei die Folie nur ein teilkristallines alpha-Olefinpolymer enthält, bei dem es sich um Polypropylen handelt und die Folie neben dem ersten und dem zweiten Cycloolefinpolymer keine weiteren Cycloolefinpolymere enthält und sowohl das erste als auch das zweite Cycloolefinpolymer Norbornen und Ethylen als Monomere enthalten.

5. Folie gemäß einem der vorangehenden Ansprüche, wobei das erste Cycloolefinpolymer und das zweite Cycloolefinpolymer jeweils in einem Anteil im Bereich von 5 bis 15 Gewichtsprozenten in der Folie enthalten sind.

6. Mehrschichtige Folie, umfassend wenigstens eine Schicht, die aus einer Folie gemäß einem der vorangehenden Ansprüche besteht.

7. Folie nach einem der vorangehenden Ansprüche, wobei die Folie einen Wärmeschrumpf in Längsrichtung von höchstens 5% bevorzugt höchstens 2% und in Querrichtung von höchstens 0,5%, bevorzugt höchstens 0.05% aufweist, gemessen nach ISO 11501 bei 130°C nach 5 Minuten.

8. Folie nach einem der vorangehenden Ansprüche, wobei die Folie eine Oberflächenrauhigkeit Rₐ in Längs- und in Querrichtung, gemessen nach DIN EN ISO 4287, im Bereich von 0,02 bis 0,2 pm, bevorzugt von 0,06µm bis 0,09µm aufweist; und/oder wobei die Folie eine Dicke, gemessen nach DIN 53370, im Bereich von 2 µm bis 10 µm und bevorzugt im Bereich von 2 bis 5 µm aufweist.

9. Folie nach einem der vorangehenden Ansprüche, wobei die Folie auf einer oder beiden Seiten metallisiert ist.

10. Verwendung einer Folie nach einem der vorangehenden Ansprüche, als Dielektrikum zur Herstellung von Kondensatoren.

11. Kondensator, **dadurch gekennzeichnet, dass** er eine Folie gemäß einem der Ansprüche 1 bis 10 umfasst.

12. Verfahren zur Herstellung einer Folie gemäß einem der Ansprüche 1 bis 10, **dadurch gekennzeichnet, dass** die Folie gemäß einem Verfahren umfassend die folgenden Schritte hergestellt wird:
- Erzeugung, insbesondere durch Extrusion, eines Films enthaltend wenigstens zwei Cycloolefinpolymere und wenigstens ein teilkristallines alpha-Olefinpolymer,
- Recken des Films in Längsrichtung (MD) und in Querrichtung (TD), um eine biaxial verstreckte Folie zu erhalten, und
- Aufwickeln der biaxial verstreckten Folie.

13. Verfahren nach Anspruch 12, **dadurch gekennzeichnet, dass** das Flächenreckverhältnis der biaxial verstreckten Folie wenigstens 40 beträgt.

14. Verfahren nach Anspruch 12 oder 13, **dadurch gekennzeichnet, dass** das Recken in Längsrichtung und in Querrichtung gleichzeitig erfolgt oder dass das Recken zunächst in Längsrichtung erfolgt und die in Längsrichtung verstreckte Folie anschließend in Querrichtung gereckt wird.

15. Verfahren nach einem der Ansprüche 12 bis 14, **gekennzeichnet durch** einen oder mehrere der folgenden weiteren Schritte:
- Wärmebehandlung der biaxial verstreckten Folie,
- Relaxierung der biaxial verstreckten Folie, wodurch das Flächenreckverhältnis gezielt verringert wird.

## Claims

1. Biaxially orientated film containing
a) at least 2 cyclic olefin polymers and
b) at least one semi-crystalline alpha-olefin polymer
wherein the sum of the percentages of all the cyclic olefin polymers in the film is in the range of 1 to 25 percent by weight and all the cyclic olefin polymers contained in the film have a glass transition temperature in the range of 120 to 180°C and the film contains at least a first cyclic olefin polymer and a second cyclic olefin polymer, wherein the second cyclic olefin polymer has a higher glass transition temperature than the first cyclic olefin polymer and
wherein the sum of the percentages of all the semi-crystalline alpha-olefin polymers in the film is in the range of 75 to 99 percent by weight and all the semi-crystalline alpha-olefin polymers contained in the film have a crystallite melting temperature in the range of 150 to 170°C and
wherein the weighted arithmetic mean of the glass transition temperatures of all the cyclic olefin polymers contained in the film is smaller than or equal to the weighted arithmetic mean of the crystallite melting temperatures of all the semi-crystalline alpha-olefin polymers contained in the film and
wherein all quantities are based on the overall mass of the film.

2. Film according to claim 1, wherein the film only contains one semi-crystalline alpha-olefin polymer and the weighted arithmetic mean of the glass transition temperatures of all the cyclic olefin polymers contained in the film is smaller than or equal to the crystallite melting temperatures of the semi-crystalline alpha-olefin polymer.

3. Film according to one of claims 1 or 2, wherein the film contains only one semi-crystalline alpha-olefin polymer, which is polypropylene;
and/or
wherein all cyclic olefin polymers are copolymers, which contain norbornene and ethylene as monomers;
and/or
wherein the sum of the percentages of all the cyclic olefin polymers in the film is in the range of 10 to 25 percent by weight and the sum of the percentages of all the semi-crystalline alpha-olefin polymers in the film is in the range of 75 to 90 percent by weight,
and/or
wherein the second cyclic olefin polymer has a glass transition temperature at least 3°C higher than that of the first cyclic olefin polymer.

4. Film according to one of the preceding claims, wherein the film contains only one semi-crystalline alpha-olefin polymer, which is polypropylene, and the film contains no further cyclic olefin polymers besides the first and the second cyclic olefin polymer and both the first and also the second cyclic olefin polymer contain norbornene and ethylene as monomers.

5. Film according to one of the preceding claims, wherein the first cyclic olefin polymer and the second cyclic olefin polymer are each contained in the film in a percentage in the range of 5 to 15 percent by weight.

6. Multi-layer film comprising at least one layer that consists of a film according to one of the preceding claims.

7. Film according to one of the preceding claims, wherein the film has a heat shrinkage in the longitudinal direction of at most 5%, preferably of at most 2%, and in the transverse direction of at most 0.5%, preferably of at most 0.05%, measured according to ISO 11501 at 130°C after 5 minutes.

8. Film according to one of the preceding claims, wherein the film has a surface roughness Rₐ in the range of 0.02 to 0.2 pm, preferably of 0.06µm to 0.09µm in the longitudinal and in the transverse direction, measured according to DIN EN ISO 4287, and/or
wherein the film has a thickness in the range of 2 µm to 10 µm and preferably in the range of 2 to 5 µm.

9. Film according to one of the preceding claims, wherein the film is metallised on one or both sides.

10. Use of a film according to one of the preceding claims as a dielectric for the manufacture of capacitors.

11. Capacitor, **characterised in that** it comprises a film according to one of claims 1 to 10.

12. Method for manufacturing a film according to one of claims 1 to 10, **characterised in that** the film is manufactured according to a method comprising the following steps:
- production, in particular by extrusion, of a film containing at least two cyclic olefin polymers and at least one semi-crystalline alpha-olefin polymer,
- stretching of the film in the longitudinal direction (MD) and in the transverse direction (TD), in order to obtain a biaxially stretched film, and
- coiling of the biaxially stretched film.

13. Method according to claim 12, **characterised in that** the surface stretching ratio of the biaxially stretched film is at least 40.

14. Method according to claim 12 or 13, **characterised in that** the stretching in the longitudinal direction and in the transverse direction occurs simultaneously or the stretching initially occurs in the longitudinal direction and the film that has been stretched in the longitudinal direction is then stretched in the transverse direction.

15. Method according to one of claims 12 to 14, **characterised by** one or more of the following further steps:
- heat treatment of the biaxially stretched film,
- relaxation of the biaxially stretched film, whereby the surface stretching ratio is deliberately reduced.

## Revendications

1. Film à orientation biaxiale contenant :
a) au moins 2 polymères cyclo-oléfiniques et
b) au moins un polymère d'alpha-oléfine partiellement cristallin,
la somme des proportions de tous les polymères cyclo-oléfiniques dans le film étant comprise dans la plage allant de 1 à 25 pour cent en poids, et tous les polymères cyclo-oléfiniques contenus dans le film ayant une température de transition vitreuse comprise dans la plage allant de 120 à 180 °C, le film contenant au moins un premier polymère cyclo-oléfinique et un deuxième polymère cyclo-oléfinique, ledit deuxième polymère cyclo-oléfinique ayant une température de transition vitreuse supérieure à celle du premier polymère cyclo-oléfinique, et
la somme des proportions de tous les polymères d'alpha-oléfine partiellement cristallins dans le film étant comprise dans la plage allant de 75 à 99 pour cent en poids, et tous les polymères d'alpha-oléfine partiellement cristallins contenus dans le film ayant une température de fusion des cristallites comprise dans la plage allant de 150 à 170 °C, et
la moyenne arithmétique pondérée des températures de transition vitreuse de tous les polymères cyclo-oléfiniques contenus dans le film étant inférieure ou égale à la moyenne arithmétique pondérée de la température de fusion des cristallites de tous les polymères alpha-oléfiniques partiellement cristallins contenus dans le film,
ladite température de transition vitreuse et ladite température de fusion des cristallites étant mesurées conformément à la norme ISO 11357 par calorimétrie différentielle à balayage (DSC) avec une vitesse de chauffe de 10K/min, et
toutes les données quantitatives étant en fonction de la masse totale du film.

2. Film selon la revendication 1, ledit film ne contenant qu'un polymère alpha-oléfinique partiellement cristallin et la moyenne arithmétique pondérée des températures de transition vitreuse de tous les polymères cyclo-oléfiniques contenus dans le film est inférieure ou égale à la température de fusion des cristallites du polymère alpha-oléfinique partiellement cristallin.

3. Film selon l'une des revendications 1 et 2, ledit film ne contenant qu'un polymère d'alpha-oléfine partiellement cristallin, consistant en du polypropylène ;
et/ou
tous les polymères cyclo-oléfiniques étant des copolymères contenant, comme monomères, du norbomène et de l'éthylène ;
et/ou
la somme des proportions de tous les polymères cyclo-oléfiniques dans le film étant comprise dans la plage allant de 10 à 25 pour cent en poids et la somme des proportions de tous les polymères alpha-oléfiniques partiellement cristallins dans le film étant comprise dans la plage allant de 75 à 90 pour cent par poids ;
et/ou
le deuxième polymère cyclo-oléfinique ayant une température de transition vitreuse qui est supérieure d'au moins 3 °C à celle du premier polymère cyclo-oléfinique.

4. Film selon l'une des revendications précédentes, ledit film ne contenant qu'un polymère alpha-oléfinique partiellement cristallin, consistant en du polypropylène et ledit film ne contenant pas d'autres polymères cyclo-oléfiniques autres que le premier et le deuxième polymère cyclo-oléfinique, ledit premier et ledit deuxième polymère cyclo-oléfinique contenant chacun, comme monomère, du norbornène et de l'éthylène.

5. Film selon l'une des revendications précédentes, dans lequel le premier polymère cyclo-oléfinique et le deuxième polymère cyclo-oléfinique sont chacun contenus dans le film selon une proportion comprise dans la plage allant de 5 à 15 pour cent en poids.

6. Film multicouche comprenant au moins une couche constituée d'un film selon l'une des revendications précédentes.

7. Film selon l'une des revendications précédentes, ledit film présentant un retrait thermique dans le sens machine d'au plus 5 % et de préférence d'au plus 2 %, et dans le sens transversal d'au plus 0,5 % et de préférence d'au plus 0,05 %, mesuré selon la norme ISO 11501 à 130 °C après 5 minutes.

8. Film selon l'une des revendications précédentes, ledit film présentant une rugosité de surface Rₐ dans le sens machine et dans le sens transversal, mesurée selon la norme DIN EN ISO 4287, comprise dans la plage allant de 0,02 à 0,2 µm, de préférence de 0,06 µm à 0,09 µm ; et/ou ledit film ayant une épaisseur, mesurée selon la norme DIN 53370, comprise dans la plage allant de 2 µm à 10 µm et de préférence dans la plage allant de 2 à 5 µm.

9. Film selon l'une des revendications précédentes, ledit film étant métallisé sur une ou deux faces.

10. Utilisation d'un film selon l'une des revendications précédentes comme diélectrique pour la production de condensateurs.

11. Condensateur **caractérisé en ce qu'**il comprend un film selon l'une des revendications 1 à 10.

12. Procédé de production d'un film selon l'une des revendications 1 à 10, **caractérisé en ce que** le film est réalisé selon un procédé comprenant les étapes suivantes :
- réalisation, notamment par extrusion, d'un film contenant au moins deux polymères cyclo-oléfiniques et au moins un polymère alpha-oléfinique partiellement cristallin,
- étirage du film dans le sens machine (MD) et dans le sens transversal (TD) pour obtenir un film à étirement biaxial, et
- enroulage du film à étirement biaxial.

13. Procédé selon la revendication 12, **caractérisé en ce que** le taux d'étirement par unité de surface du film à étirement biaxial est d'au moins 40.

14. Procédé selon la revendication 12 ou 13, **caractérisé en ce que** l'étirage dans le sens machine et dans le sens transversal ont lieu simultanément ou **en ce que** l'étirage a lieu tout d'abord dans le sens longitudinal avant que le film étiré dans le sens machine ne soit étiré dans le sens transversal.

15. Procédé selon l'une des revendications 12 à 14, **caractérisé par** une ou plusieurs des étapes supplémentaires suivantes :
- traitement thermique du film à étirement biaxial,
- relâchement du film à étirement biaxial, moyennant quoi le taux d'étirement par unité de surface connaît une réduction ciblée.
